# EUROPEAN PATENT SPECIFICATION

(11) **EP 0 497 329 B1**
(45) Date of publication and mention of the grant of the patent: **22.03.1995**
(21) Application number: 92101491.6
(22) Date of filing: 30.01.1992
(51) Int. Cl.: H02K 49/04

(54) **Eddy-current brake**
Wirbelstrombremse
Frein à courants de Foucault

(30) Priority: 31.01.1991 JP 32034/91
(43) Date of publication of application: 05.08.1992
(73) Proprietor: Isuzu Motors Limited, Shinagawa-ku, Tokyo 140 (JP)
(72) Inventor: Kubomiya, Tomoyuki, Kawasaki-shi, Kanagawa-ken (JP)
(74) Representative: Niedmers, Ole, Dipl.-Phys.

(56) References cited:
- EP-A- 0 160 215
- EP-A- 0 367 387
- GB-A- 2 057 610

## Description

The present invention principally relates to an eddy-current type reduction gear which assists a friction brake of a large vehicle, and particularly to an eddy-current type reduction gear which can shorten an axial dimension.

In an eddy-current type reduction gear disclosed in Japanese Patent Application No. 218498/1989, a magnet supporting ring for connecting a number of permanent magnets (hereinafter merely called magnets) in a peripheral equally spaced relation is supported on a fixed frame projecting into a brake drum. The magnet supporting ring is axially moved to switch between a brake position in which the magnets exert a magnetic field on the inner cylindrical surface of the brake drum and a non-brake position in which the magnets do not exert a magnetic field on the inner cylindrical surface of the brake drum. In this eddy-current type reduction gear, an axial dimension of the fixed frame is long so that it involves various difficulties for example when a reduction gear together with a parking brake are arranged in a narrow mounting space of a connecting portion between an output rotational shaft of a transmission and a propeller shaft under the floor of a vehicle. EP-A-160215 and GB-A-2057610 disclose each an eddy-current type reduction gear where the permanent magnets are rotated on their axis when switching between a brake and a non-brake situation, and having the brake drum placed in the axial direction, the magnetic flux circuits extending in planes parallel to the axis.

In view of the aforementioned problem, an object of the present invention is to provide an eddy-current type reduction gear which can shorten an axial dimension of apparatus by carrying out the switching operation between a brake and a non-brake without axially moving a magnet supporting ring.

For achieving to the aforesaid object, the present invention provides according to a first embodiment an arrangement which comprises an immovable magnet supporting ring formed of a non-magnetic material is arranged interiorly of a brake drum connected to a rotational shaft, a number of cylindrical space portions and short-circuiting members formed of a ferromagnetic material are alternately arranged in a peripheral equally spaced relation on the magnet supporting ring, a permanent magnet is rotatably supported in each space portion by a shaft parallel with the rotational shaft of the brake drum, an a drive means is provided to rotate the permanent magnet so as to be switched between a brake position in which polarities of a number of permanent magnets opposed to an inner cylindrical surface of the brake drum are alternately different and a non-brake position in which magnetic poles of the permanent magnets are aligned in a peripheral direction and the polarities of the adjacent magnets are different from each other.

For achieving to the aforesaid abject, the present invention provides according to a second embodiment an arrangement which comprises an immovable magnet supporting magnet ring formed of a non-magnetic material is arranged interiorly of a brake drum connected to a rotational shaft, a number of cylindrical space portions and short-circuiting members formed of a ferromagnetic material are alternately arranged in a peripheral equally spaced relation on the magnet supporting ring, an inner cylinder and a short-circuiting member extending from an intermediate portion of each short-circuiting member to the inner cylinder which are formed of a ferromagnetic material are arranged on the inner peripheral wall of the magnet supporting ring, a permanent magnet is rotatably supported in each space portion by a shaft parallel with the rotational shaft of the brake drum, and a drive means is provided to rotate the permanent magnet so as to be switched between a brake position in which polarities of a number of permanent magnets opposed to an inner cylindrical surface of the brake drum are alternately different and a non-brake position in which magnetic poles of the permanent magnets are aligned in a peripheral direction and polarities of the adjacent magnets are the same.

According to the present invention, a number of magnets arranged in a peripheral equally spaced relation on a magnet supporting ring are rotated a quarter together with the rotational shaft parallel with the shaft of the brake drum, switching is made between a brake and non-brake positions. At the brake position in which the magnetic pole of the magnet is opposed to the inner cylindrical surface of the brake drum, when the rotating brake drum crosses the magnetic field, an eddy current flows into the brake drum, which then receives a braking force. On the other hand, at the non-brake position in which magnetic poles of the magnets are aligned in a peripheral direction, a magnetic circuit passing through the short-circuiting members interiorly of the magnet supporting ring is formed so that the magnetic field does not exert on the brake drum and the brake drum does not receive the braking force.

The invention will now be described in detail with reference to two examples of embodiments shown in the accompaying diagrammatic drawings, in which:
- Fig. 1: is a side sectional view of an eddy-current type reduction gear according to the present invention.
- Fig. 2: is a front sectional view of means for rotating and driving magnets in the reduction gear.
- Fig. 3: is a front sectional view of a magnet supporting ring.
- Fig. 4: is a front sectional view showing the relationship between a brake drum and magnets during braking.
- Fig. 5: is a front view showing a further embodiment of the means for rotating and driving magnets.
- Fig. 6: is a front sectional view showing another embodiment of a magnet supporting ring.

A description will be made of an embodiment in which an eddy-current type reduction gear according to the present invention is arranged at a rear end of a vehicle transmission. As shown in Fig .1, a coupling flange 6 is spline-fitted in and fastened, by means of a nut 5, to an output rotational shaft 4 supported on a rear end wall of a gear box 3 by means of a bearing 2. An end wall of a brake drum 10 of a well-known parking brake and an end wall 12 of a brake drum 13 of a reduction gear are overlaid on the coupling flange 6 and fastened by bolts 8 and nuts 9. A yoke 7 of a universal joint for connecting the rotational shaft 4 and a well-known propeller shaft is fitted into the coupling flange 6 and connected by means of bolts, not shown. The brake drum 13 is provided in its outer peripheral wall with a number of cooling fins 15 in a peripheral equally spaced relation.

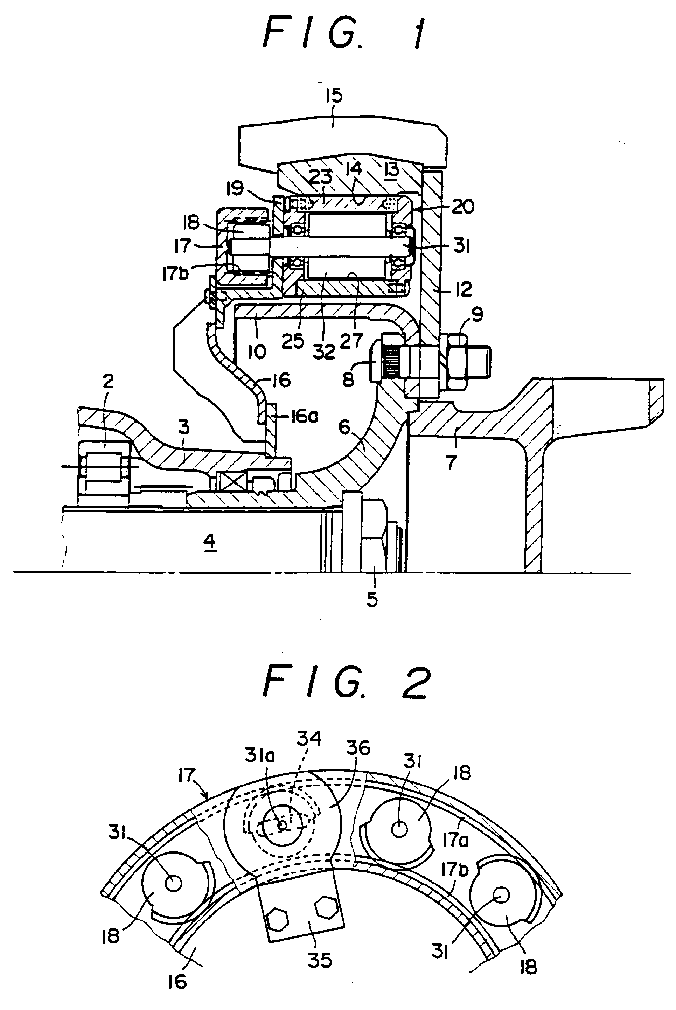

A magnet supporting ring 20 supporting a number of magnets 32 is arranged in a space portion between an inner cylindrical surface 14 of a brake drum 13 and an outer peripheral surface of the brake drum 10. To mount the magnetic supporting ring 20, a circular frame plate 16 having a reinforcing rib is secured to a rear end wall of a gear box 3 through a mounting plate 16 a, a magnet supporting ring 20 is secured to a right end surface of the frame plate 16 by a supporting plate 19 having a L-shaped section, and a driving ring 17 having a C-shaped section is normally and reversibly rotatably arranged on a left wall surface of the supporting plate 19. A magnet supporting ring 20 of non-magnetic material has a rectangular section and is provided in a peripheral equally spaced relation with a number of cylindrical space portions 27 for receiving columnar magnets 32 coupled to a rotational shaft 31 parallel with the rotational shaft 4 the magnets 32 are rotatably received together with the ratational shaft 31 in the space portions 27. The left end of the rotational shaft 31 is extended from the magnet supporting ring 20 into the driving ring 17 and has a partial gear 18 coupled thereto. The partial gear 18 shown in Fig. 1 has teeth in the lower half peripheral portion thereof which are meshed with a gear 17 b formed interiorly of the driving ring 17.

As shown in Fig. 2, the rotational shafts 31 adjacent to each other have the partial gear 18 meshed with the gear 17 b of the driving ring 17 and a partial gear 18 meshed with an internal gear 17 a of the driving ring 17. A rotational shaft 31 a is outwardly projected from a circular slot 34 provided in the end wall of the driving ring 17 and connected to a shaft of an electric motor 36 coupled to the frame plate 16 by a supporting plate 35. Accordingly, when the rotational shaft 31 a is normally and reversibly rotated a quarter by the electric motor 36, the driving ring 17 rotates so that the partial gears 18 adjacent to each other are driven in the direction opposed to each other and the direction of the magnetic poles of the magnets 32 is changed.

The magnet supporting ring 20 of non-magnetic material has an outer cylinder 23 and an inner cylinder 25 coupled between a pair of annular end wall plates, and a pair of magnetic pole members 21 and 22 formed of a ferromagnetic material. The magnetic pole members 21 and 22 sandwiching magnet 32 therebetween are coupled to the outer cylinder 23 and the inner cylinder 25, respectively. The magnetic pole member 21 is embedded into an opening of the outer cylinder 23. The inner cylinder 25 constitutes a yoke formed of a ferromagnetic material. A short-circuiting member 24 formed of a ferromagnetic material between the peripherally arranged magnets 32 is arranged between the outer cylinder 23 and the inner cylinder 25. A cylindrical space portion 27 encircling the permanent magnet 32 is formed between the magnetic pole members 21 and 22 and a pair of short-circuiting member 24. Between the outer cylinder 23 and the short-circuiting member 24 and between the short-circuiting member 24 and the inner cylinder 25, space portions are formed or non-magnetic material such as aluminium is cast therein.

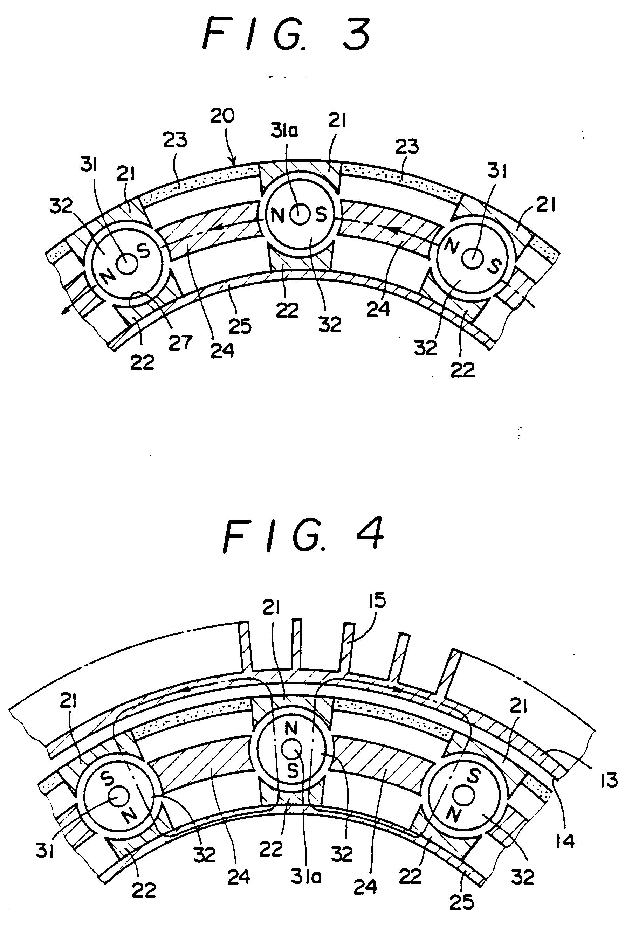

As shown in Fig. 3, in the non-brake state in which magnetic poles of the magnets 32 are arranged in the peripheral direction, the magnets 32 adjacent to each other form a magnetic circuit indicated by the chain ligne to the short-circuiting members 24. When the rotational shaft 31 a is clockwise rotated a quarter by the motor 36 as shown in Fig. 4. from the state shown in Fig. 3, the magnet 32 integral with the partial gear 18 meshed with the internal gear 17 a of the driving ring 17 is opposed in its magnetic pole N to the inner cylindrical surface 14 of the brake drum 13 whereas the magnet 32 integral with the partial gear 18 meshed with the gear 17 b of the driving ring 17 is opposed in its magnetic pole S to the inner cylindrical surface 14 of the brake drum 13. As indicated by the chain line in Fig. 4, magnetic circuits are generated in the magnet 32, the magnetic pole member 21, the brake drum 13, the adjacent magnetic pole member 21, the adjacent magnet 32, the magnetic pole member 22, and the inner cylinder 25, and when the brake drum 13 crosses the magnetic field from the magnetic pole member 21, an eddy current is generated to receive a braking torque.

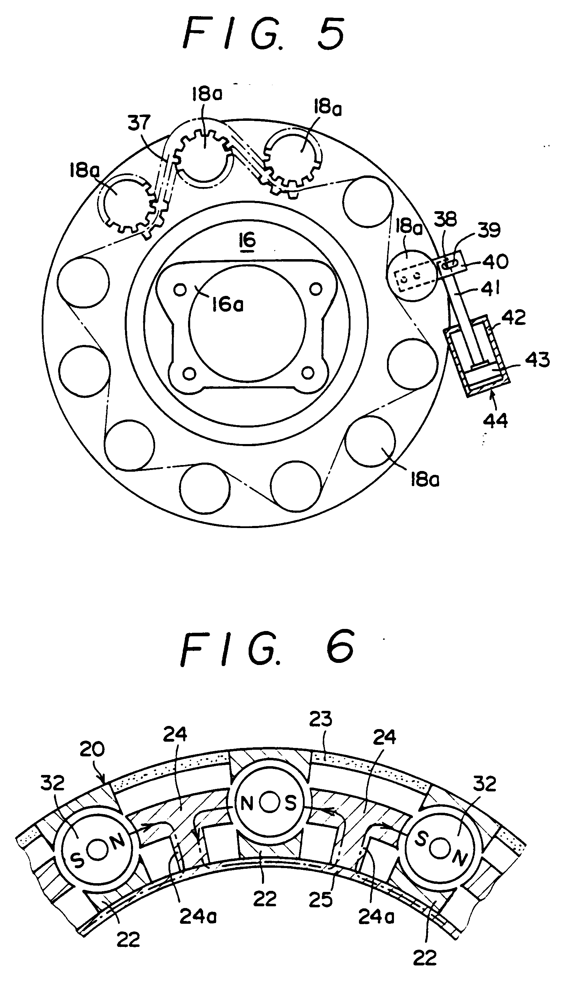

In the aforementioned embodiment, the means for rotating and driving the magnets causes one of the partial gears 18 coupled to the rotational shafts 31 of the magnets 32 adjacent to each other to be meshed with the internal gear 17 a of the driving ring 17 and the other to be meshed with the gear 17 b of the driving ring 17, to rotate them in the direction reversed to each other. However, it is to be noted that as shown in Fig. 5, a cog-belt 37 having teeth on both surfaces thereof is passed over the gears 18 a (which may be partial gears), a slot 39 is provided in an arm 40 coupled to one of the gears 18 a, and a rod 41 of an actuator 44 secured to the frame plate 16 is connected to the slot 39 in the arm 40 by means of a pin 38. The actuator 44 is designed so that a piston 43 is fitted into a cylinder 42 to define chambers on opposite ends thereof, and the rod 41 is coupled to the piston 43. When pressure air is supplied to one chamber, the rod 41 projects or withdraws, and the gear 18 a of each magnet 32 is normally and reversibly rotated.

In an embodiment shown in Fig. 6, a diametral short-circuiting member 24 a is provided between an intermediate portion of the short-circuiting members 24 and an inner cylinder 25, and when the poles of each magnets 32 are aligned in the peripheral direction, the magnets 32 adjacent to each other having the same polarities are arranged oppositely to each other. At the time of non-brake, the magnets 32 form a magnetic circuit from N-pole to S-pole via the short-circuiting members 24 and 24 a, the inner cylinder 25, and the adjacent short-circuiting members 24 a and 24. At the time of braking, when all the magnets 32 are rotated in the same direction a quarter, the polarities of the magnets 32 opposed to the inner cylindrical surface 14 of the brake drum 13 are aligned to be different alternately in the peripheral direction, and therefor, the rotating and driving means for the magnets 32 is simple.

As described above, the construction of the present invention comprising an immovable magnet supporting ring formed of a non-magnetic material is arranged interiorly of a brake drum connected to a rotational shaft, a number of cylindrical space portions and short-circuiting members formed of a ferromagnetic material are alternately arranged in a peripheral equally spaced relation on the magnet supporting ring, a permanent magnet is rotatably supported in each space portion by a shaft parallel with the rotational shaft of the brake drum, and a drive means is provided to rotate the permanent magnet so as to be switched between a brake position in which polarities of a number of permanent magnets opposed to an inner cylindrical surface of the brake drum are alternately different and a non-brake position in which magnetic poles of the permanent magnets are aligned in a peripheral direction and the polarities of the adjacent magnets are different from each other.

Since the switching operation between the braking and non-braking positions is carried out by rotation of the magnets without axial movement of the magnets, the magnet supporting ring is accommodated into the brake drum in a compact manner, the axial dimension of the apparatus is considerably shortened as compared with prior art and easily mounted on the vehicle.

If there is room in axial dimension of a mounting space of a vehicle, a braking performance can be increased by using magnets as long as possible.

If the rotational amount of the magnets is adjusted, the intensity of the magnetic field exerting on the brake drum is varied whereby the braking force can be controlled depending on the running conditions.

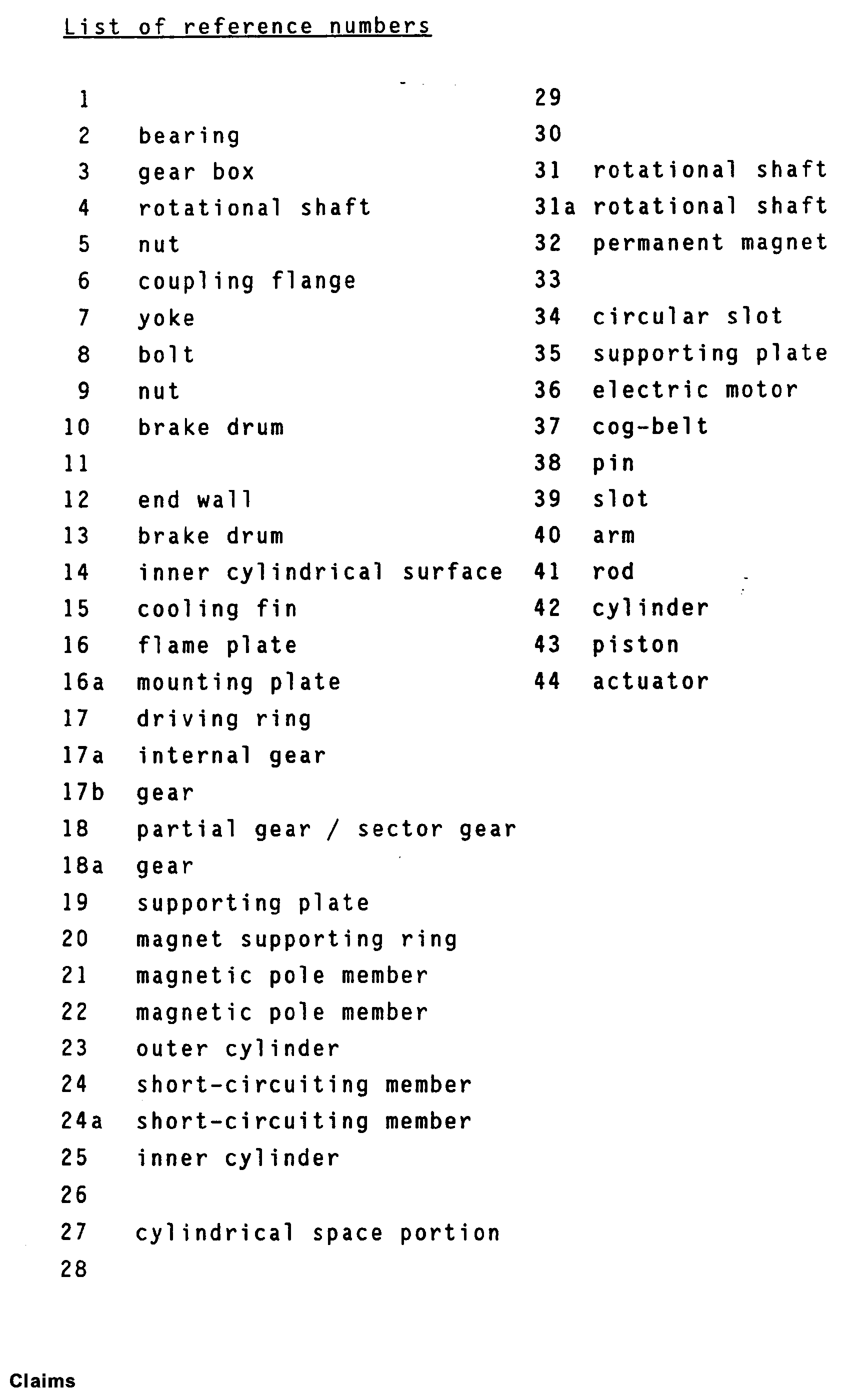

## Claims

1. An eddy-current type reduction gear, characterised in that an immovable magnet supporting ring (20) formed of a non-magnetic material is arranged interiorly of a brake drum (13) connected to a rotational shaft (4), a number of cylindrical space portions (27) and short-circuiting members (24) formed of a ferromagnetic material are alternately arranged in a peripheral equally spaced relation on the magnet supporting ring (20), a permanent magnet (32) is rotatably supported in each space portion by a shaft parallel with the rotational shaft (4) of the brake drum (13), and a drive means is provided to rotate the permanent magnet (32) so as to be switched between a brake position in which polarities of a number of permanent magnets (32) opposed to an inner cylindrical surface (14) of the brake drum (13) are alternately different and a non-brake position in which magnetic poles of the permanent magnets (32) are aligned in a peripheral direction and the polarities of the adjacent magnets are different from each other.

2. An eddy-current type reduction gear, characterised in that an immovable magnet supporting magnet ring (20) formed of a non-magnetic material is arranged interiorly of a brake drum (13) connected to a rotational shaft (4), a number of cylindrical space portions (27) and short-circuiting members (24) formed of a ferromagnetic material are alternately arranged in a peripheral equally spaced relation on the magnet supporting ring (20), an inner cylinder (25) and a short-circuiting member (24a) extending from an intermediate portion of each short-circuiting member (24) to the inner cylinder (25) which are formed of a ferromagnetic material are arranged on the inner peripheral wall of the magnet supporting ring (20), a permanent magnet (32) is rotatably supported in each space portion by a shaft (31) parallel with the rotational shaft (4) of the brake drum (13), and a drive means is provided to rotate the permanent magnet so as to be switched between a brake position in which polarities of a number of permanent magnets (32) opposed to an inner cylindrical surface (14) of the brake drum (13) are alternately different and a non-brake position in which magnetic poles of the permanent magnets (32) are aligned in a peripheral direction and polarities of the adjacent magnets (32) are the same.

3. Eddy-current type reduction gear according claim 1, characterised in that the rotational shaft (31) is provided with a gear (18), whereby its teeth are meshing with gears (17a,b), formed interiorly of the driving ring (17).

4. Eddy-current type reduction gear according claim 2, characterised in that the rotational shaft (31) is provided with a gear (18a), whereby its teeth are meshing with a cog-belt (37), which has teeth on both surfaces thereof.

5. Eddy-current type reduction gear according to claims 1 and 3 or to claims 2 and 4, characterised in that the gear (18; 18a) is of the partial gear type, which has at least teeth in the half peripheral portion.

6. Eddy-current type reduction gear according to claims 1, 3 and 5 or to claims 2, 4 and 5, characterised in that the gear (18; 18a) will be rotated by means of an electric motor (36).

7. Eddy-current type reduction gear according to claims 1, 3 and 5 or to claims 2, 4 and 5, characterised in that the gear (18; 18a) will be rotated in both directions by means of an actuator (44) of the piston-cylinder-system type (41, 42, 43), which actuates to an arm (40), coupled to the gear (18a).

8. Eddy-current type reduction gear according to claim 7, characterised in that the piston-cylinder-system (41, 42, 43) will be actuated by pressured air and/or an hydraulic medium.

9. Eddy-current type reduction gear according to claims 1, 3, 5-7 or to claims 2, 4-7, characterised in that at least the space between an outer cylinder (23) of the magnet supporting ring (20) and the short-circuiting member (24) is filled by a non-magnetic material.

## Patentansprüche

1. Eine Wirbelstrombremse, dadurch gekennzeichnet, daß ein unbeweglicher Magnettragring (20), der aus einem nichtmagnetischen Material gebildet ist, innerhalb einer Bremstrommel (13) angeordnet ist, die mit einer drehbaren Welle (4) verbunden ist, daß eine Anzahl von zylindrischen Zwischenraumbereichen (27) und Kurzschlußstükken (24), die aus einem ferromagnetischen Material bestehen, in Umfangsrichtung in einem gleichen Zwischenraumverhältnis auf dem Magnettragring (20) abwechselnd angeordnet sind, daß ein Permanentmagnet (32) durch eine Welle in jedem Zwischenraumbereich drehbar gelagert ist, die parallel zu der Drehwelle (4) der Bremstrommel (13) verläuft, und daß ein Antriebsmittel vorgesehen ist, um die Permanentmagneten (32) zu drehen, um zwischen einer Bremsposition, in der die Polaritäten einer Anzahl von Permanentmagneten (32), die gegenüber einer inneren zylindrischen Oberfläche (14) der Bremstrommel (13) liegen, sich abwechselnd unterscheiden, und einer Position des Nichtbremsens zu schalten, in der die magnetischen Pole der Permanentmagneten (32) in einer Umfangsrichtung ausgerichtet sind und die Polaritäten der nebeneinanderliegenden Magneten sich jeweils voneinander unterscheiden.

2. Eine Wirbelstrombremse, dadurch gekennzeichnet, daß ein unbeweglicher Magnettragring (20), der aus einem nichtmagnetischen Material besteht, innerhalb einer Bremstrommel (13) angeordnet ist, die mit einer drehbaren Welle (4) verbunden ist, daß eine Anzahl von zylindrischen Zwischenraumbereichen (27) und Kurzschlußstükken (24), die aus einem ferromagnetischen Material gebildet sind, auf dem Magnettragring in Umfangsrichtung in einem gleichen Zwischenraumverhältnis abwechselnd angeordnet sind, daß ein innerer Zylinder (25) und ein Kurzschlußstück (24 a), das sich von einem Zwischenraumbereich von jedem Kurzschlußstück (24) zu dem inneren Zylinder (25) erstreckt, die aus einem ferromagnetischen Material bestehen, auf der inneren Umfangswandung des Magnettragrings (20) angeordnet sind, daß ein Magnettragring (32) durch eine Welle drehbar in jedem Zwischenraumbereich gehalten ist, die parallel zu der Drehwelle (4) der Bremstrommel (13) verläuft, und daß ein Antriebsmittel vorgesehen ist, um den Permanentmagneten zu drehen, um zwischen einer Bremsposition, in der die Polaritäten einer Anzahl von Permanentmagneten (32), die gegenüber einer inneren zylindrischen Oberfläche (14) der Bremstrommel (13) liegen, sich abwechselnd unterscheiden, und einer Position des Nichtbremsens zu schalten, in der die magnetischen Pole der Permanentmagneten (32) in einer Umfangsrichtung angeordnet sind und die Polaritäten der benachbarten Magneten (32) gleich sind.

3. Wirbelstrombremse gemäß Anspruch 1, dadurch gekennzeichnet, daß die drehbare Welle (31) mit einem Zahnrad (18) versehen ist, wobei dessen Zähne in Eingriff mit Zahnrädern (17 a, b) sind, die innerhalb des Antriebsringes (17) gebildet sind.

4. Wirbelstrombremse gemäß Anspruch 2, dadurch gekennzeichnet, daß die drehbare Welle (31) mit einem Zahnrad (18 a) versehen ist, wobei dessen Zähne mit einem Zahnriemen (37) in Eingriff sind, der auf beiden Oberflächen Zähne besitzt.

5. Wirbelstrombremse gemäß den Ansprüchen 1 und 3 oder den Ansprüchen 2 und 4, dadurch gekennzeichnet, daß das Zahnrad (18; 18 a) in der Art einer Teilverzahnung ausgebildet ist, die zumindest Zähne in der Hälfte des Umfangsbereiches besitzt.

6. Wirbelstrombremse gemäß den Ansprüchen 1, 3 und 5 oder den Ansprüchen 2, 4 und 5, dadurch gekennzeichnet, daß das Zahnrad (18; 18 a) durch einen elektrischen Motor (36) gedreht wird.

7. Wirbelstrombremse gemäß den Ansprüchen 1, 3 und 5 oder den Ansprüchen 2, 4 und 5, dadurch gekennzeichnet, daß das Zahnrad (18; 18 a) in beide Richtungen durch einen Antrieb (44) gedreht wird, der von der Art des Kolben-Zylinder-Systems (41, 42, 43) ist und der einen Arm (40) antreibt, der mit dem Zahnrad (18 a) verbunden ist.

8. Wirbelstrombremse gemäß Anspruch 7, dadurch gekennzeichnet, daß das Kolben-Zylinder-System (41, 42, 43) durch Preßluft und/oder ein hydraulisches Medium betätigt wird.

9. Wirbelstrombremse gemäß den Ansprüchen 1, 3, 5 bis 7 oder den Ansprüchen 2, 4 bis 7, dadurch gekennzeichnet, daß wenigstens ein Zwischenraum zwischen einem äußeren Zylinder (23) des Magnettragrings (20) und dem Kurzschlußstück (24) durch ein nichtmagnetisches Material gefüllt ist.

## Revendications

1. Un réducteur de type à courant de Foucault, caractérisé en ce qu'une couronne porte-aimants fixe (20) réalisée en matériau non-magnétique est agencée à l'intérieur d'un tambour de frein (13) relié à un arbre tournant (4), une pluralité d'éléments d'espacement cylindriques (27) et d'éléments de court-circuit (24) réalisés en matériau ferromagnétique sont disposés alternativement dans un rapport d'espacement périphérique égal sur la couronne porte-aimants (20), un aimant permanent (32) est monté à rotation dans chaque élément d'espacement par un arbre parallèle à l'arbre tournant (4) du tambour de frein (13), et des moyens d'entraînement sont prévus pour faire tourner l'aimant permanent (32) de manière à le commuter entre une position de freinage, dans laquelle les polarités d'une pluralité d'aimants permanents (32) opposés à une surface cylindrique intérieure (14) du tambour de frein (13) sont alternativement différentes et une position de non-freinage dans laquelle les pôles magnétiques des aimants permanents (32) sont alignés dans une direction périphérique et les polarités des aimants adjacents sont différentes les unes des autres.

2. Un réducteur de type à courant de Foucault, caractérisé en ce qu'une couronne porte-aimants fixe (20) réalisée en matériau non-magnétique est agencée à l'intérieur d'un tambour de frein (13) relié à un arbre tournant (4), une pluralité d'éléments d'espacement cylindriques (27) et d'éléments de court-circuit (24) réalisés en matériau ferromagnétique sont disposés alternativement dans un rapport d'espacement périphérique égal sur la couronne porte-aimants (20), un cylindre intérieur (25) et un élément de court-circuit (24a), s'étendant à partir d'une partie intermédiaire de chaque élément de court-circuit (24) jusqu'au cylindre intérieur (25), réalisés en matériau ferromagnétique sont agencés sur la paroi périphérique intérieure de la couronne porte-aimants (20), un aimant permanent (32) est monté à rotation dans chaque élément d'espacement par un arbre (31) parallèle à l'arbre tournant (4) du tambour de frein (13), et des moyens d'entraînement sont prévus pour faire tourner l'aimant permanent de manière à le commuter entre une position de freinage, dans laquelle les polarités d'une pluralité d'aimants permanents (32) opposés à une surface cylindrique intérieure (14) du tambour de frein (13) sont alternativement différentes et une position de non-freinage dans laquelle les pôles magnétiques des aimants permanents (32) sont alignés dans une direction périphérique et les polarités des aimants adjacents sont les mêmes.

3. Réducteur à courant de Foucault selon la revendication 1, caractérisé en ce que l'arbre tournant (31) est pourvu d'un engrenage (18) de manière que ses dents viennent en prise sur les engrenages (17a, 17b) agencés à l'intérieur de la couronne d'entraînement (17).

4. Réducteur à courant de Foucault selon la revendication 2, caractérisé en ce que l'arbre tournant (31) est pourvu d'un engrenage (18a) de manière que ses dents viennent en prise sur une courroie à créneaux (37) pourvue de dents sur ses deux faces.

5. Réducteur à courant de Foucault selon les revendications 1 et 3 ou les revendications 2 et 4, caractérisé en ce que l'engrenage (18; 18a) est du type en secteur denté ou engrenage partiel, pourvu de dents sur, au moins, la moitié de la partie périphérique.

6. Réducteur à courant de Foucault selon les revendications 1, 3 et 5 ou les revendications 2, 4 et 5, caractérisé en ce que l'engrenage (18; 18a) sera entraîné au moyen d'un moteur électrique (36).

7. Réducteur à courant de Foucault selon les revendications 1, 3 et 5 ou les revendications 2, 4 et 5, caractérisé en ce que l'engrenage (18; 18a) sera entraîné à rotation dans les deux directions au moyen d'un dispositif d'actionnement (44) de type à système piston-cylindre (41, 42, 43) qui actionne un bras (40) accouplé à l'engrenage (18a).

8. Réducteur à courant de Foucault selon la revendication 7, caractérisé en ce que le système piston-cylindre (41, 42, 43) sera actionné par de l'air comprimé et/ou un milieu hydraulique.

9. Réducteur à courant de Foucault selon les revendications 1, 3, 5-7 ou les revendications 2, 4-7, caractérisé en ce qu'au moins l'espace entre le cylindre extérieur (23) de la couronne porte-aimants (20) et l'élément de court-circuit (24) est rempli d'un matériau non-magnétique.
